# EUROPEAN PATENT APPLICATION

(11) **EP 2 784 189 A1**
(43) Date of publication of application: **01.10.2014**
(21) Application number: 13161725.0
(22) Date of filing: 28.03.2013
(51) Int. Cl.: C25D 3/56, C25D 5/12

(54) **Electroplating bath for zinc-iron alloys, method for depositing zinc-iron alloy on a device and such a device**

(71) Applicant: Coventya SAS, 92396 Villeneuve-la-Garenne Cedex (FR); University of Besançon, 25030 Besançon (FR)
(72) Inventor: Deloye, Fanny, 10150 Pont Sainte Marie (FR); Gigandet, Marie-Pierre, 25230 Seloncourt (FR); Thiery, Lionel, 92110 Clichy (FR); Hihn, Jean-Yves, 25770 Serre les Sapi (FR); Pommier, Nicolas, 92600 Asnières-sur-Seine (FR); Coll, Yoann, 92110 Clichy (FR); Lallemand, Fabrice, 70190 Bussier (FR)
(74) Representative: Pfenning, Meinig & Partner GbR

(57) **Abstract**

The present invention relates to an electroplating bath for zinc-iron alloys as an anti-corrosive layer and to a method for depositing zinc-iron alloy on a device. The invention also relates to a device which comprises an anti-corrosive layer of a zinc-iron alloy and the use of mentioned electroplating bath.

## Description

The present invention relates to an electroplating bath for zinc-iron alloys as an anti-corrosive layer and to a method for depositing zinc-iron alloy on a device. The invention also relates to a device which comprises an anti-corrosive layer of a zinc-iron alloy and the use of mentioned electroplating bath.

The Zinc/Nickel alloy with a percentage of Nickel comprised between 12 and 15% is largely used for the sacrificial protection of steel against corrosion. It offers several advantages versus pure Zinc. Its corrosion potential is close to the one of iron and consequently offers a slower corrosion rate compared to pure Zinc. Its anti corrosion properties are then higher than pure Zinc.

The automotive industry has qualified this alloy for several applications and especially for the protection against corrosion on fasteners and small parts submitted to high corrosive environment.

Nickel salts are CMR cat 1A, there has been a proposal from France to include them in the so called candidate list of substances of very high concern (SVHC) according to REACH regulation n° 1907/2006.

This proposal was not adopted by the commission so far, but there is high risk that Ni salts will be proposed again in the next future.

There is consequently a need for finding a substitute to Zinc/Nickel alloy that offers comparable performances and with no impact on the health and safety of workers and environment.

There are not many elements to be alloyed with Zinc in order to bring its corrosion potential close to the one of iron (- 0.44 V/SHE : Standard Hydrogen Electrode).

Tin is a potential candidate but its cost is quite prohibitive for this type of protection as the Tin/Zinc alloys contain up to 70% Sn. In addition, conversion layers free of CrVI are not very effective for this alloy.

Iron is the metal of choice as its alloy with Zinc will always remain sacrificial versus steel.

Zinc/Iron electrodeposited alloys exist for many years. In 1995, W Eckles in US 5,405,523 disclosed the electrodeposition of zinc alloyed with metal ions of elements from the first transition of the periodic table, the bath comprising a ureylene quaternary ammonium polymer as brightening agent. The resulting deposits contain generally between 0.1 and 1% by weight of the alloying element.

US 4,740,278 & US 4,746,411 from Electrobrite mention the obtention of deposits containing up to 20% Fe but in acidic media.

US 4,444,629 from OMI shows how to obtain a 32% Fe containing deposit but also in acidic media

US 4,541,903 from Kawasaki Steel and EP 0,546,914 from SOLLAC also show deposits with high iron content but also in acidic media and for high current densities since the application is for coil coating.

The drawbacks associated with acidic electrolytes are well known, the metallic distribution on the parts to be plated is very poor compared to an alkaline electrolyte. On complicated items like fasteners, there are major risks to have very low thicknesses in the recessed areas of low current densities causing early corrosion (i.e. in threads of a screw). The high current densities areas show on the contrary high thicknesses. The global quantity of zinc alloy deposited on the parts is then higher with an acidic electrolyte.

Finally WO 2012/110304 from Atotech discloses a zinc iron layer material in which they claim a 12 to 20% Fe layer with a defined gamma phase and 330 texture, only this particular alloy is able to provide a deposit with high corrosion resistance, high hardness and bright aspect.

The objective of the present invention is to provide a deposit of zinc and iron providing a high corrosion resistance superior to the one of pure Zn and comparable to the one of Zn/Ni used as a reference. The excellent anticorrosion properties are additionally obtained in combining the deposit of the invention with CrIII conversion layers that are free of Cobalt ions. The present invention also describes the alkaline electrolyte to be used to obtain such a deposit. This electrolyte offers the advantage versus other solutions to be completely free of any carboxylic acids.

This objective is solved by the electroplating bath for zinc-iron alloys with the features of claim 1, the method for depositing zinc-iron alloy on a device with the features of claim 7 and the device of claim 8. In claim 14 inventive uses of the electroplating bath are mentioned. The further dependent claims describe preferred embodiments.

According to the present invention, an electroplating bath for zinc-iron alloys is provided which comprises:
a) from 4 to 20 g/L of zinc ions,
b) from 1 to 10 g/L of a iron ions,
c) from 20 to 150 g/L of sodium hydroxide and/or potassium hydroxide,
d) from 0,02 to 0,1 g/L of a quaternary ammonium polymer and
e) at least one complexing agent selected from the group consisting of amines, polyols or mixtures thereof.

The present invention aims to develop a sacrificial deposit of Zinc alloyed with iron, in order to protect steel against corrosion, the deposit being made from an alkaline electrolyte. It was shown that high percentages of iron enable to increase the potential of the zinc layer and bring it closer to the corrosion potential of steel. Zn/Fe with high percentages of iron show anti corrosion behaviour comparable to the one of Zn/Ni alloys with percentages of Nickel comprised between 12 and 15%.

The electrolyte used to produce Zn/Fe deposits with high Fe content is of alkaline pH. The electrolytes of alkaline pH in opposition to the acidic electrolytes favour the metallic distribution on the plated parts.

Preferably, zinc is introduced in the plating bath as zincate ion. The Zn concentration is adjusted between 4 and 20 g/L, preferably between 6 and 10 g/L. The sodium hydroxide concentration is adjusted between 20 and 150 g/L and more preferably between 30 and 120 g/L.

Iron is introduced as ferrous or ferric salt, more preferably is the use of ferric salt like ferric Sulphate, ferric Chloride, ferric Oxide, ferric Nitrate.

Ferrous or ferric ions have to complexed with appropriate complexing agents to be maintained in solution at very alkaline pH (> 14). Amongst the various complexing agents, amines are the preferred ones and especially alkanolamines like MEA, DEA, TEA or N,N,N',N'-tetrakis-(2-hydroxypropyl)-ethylenediamine. Polyols like sorbitol, mannitol can also be used as complexing agents for iron as well as mixtures of polyols and amines.

Carboxylic or hydroxycarboxylic acids and their salts like sodium gluconate or sodium citrate are avoided as they can create breakdown products detrimental for the efficiency of the plating bath.

The respective quantities of iron and complexing agents are varied in order to obtain a deposit containing various percentages of iron.

The bath of the invention further contains quaternary ammonium polymers added in order to obtain homogeneous deposits in terms of aspect and metallic distribution. An example of such an additive is Mirapol WT from Rhodia. The quantity of this additive is ranging between 20 and 1000 ppm.

Moreover, a method for depositing zinc-iron alloy on a device is provided using the electroplating bath which is described above.

Moreover, a device comprising an anti-corrosive layer of zinc-iron alloy is provided wherein the layer has a content of iron of 7 to 28 wt.-% and the iron comprises at least two of crystalline structures selected from the cubic, the monoclinic and the hexagonal crystalline structure of Zn/Fe.

The crystalline structures are preferably selected from the phases ξ, δ1, η,Γ1 and Γ and combinations thereof.

The layer has preferably a thickness of 0,5 to 50 µm, more preferably 3 to 20 µm.

In a preferred embodiment, the layer has a content of iron of more than 20 wt.-%, more preferably 21 to 28 wt.-%.

In a further preferred embodiment, the layer has a content of iron of less than 12 wt.-%, more preferably 7 to 12 wt.-%.

The device is preferably producible by the above mentioned method.

The present invention is described in more detail according to the following figures and examples without limiting the invention to these specific embodiments.
Fig. 1 shows a diagram with chronopotentium metric codes of different Zn/Fe alloys in NaCl 5%.

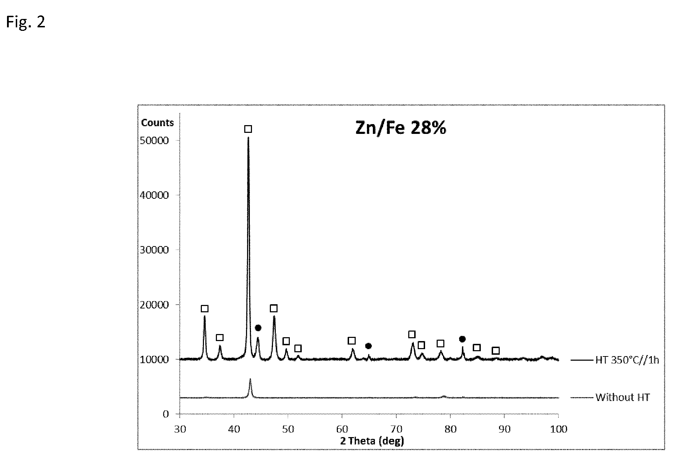

Fig. 2 shows a XRD structure of Zn/Fe alloys containing 28 % Fe in the deposit.
Fig. 3 shows a XRD structure of Zn/Fe alloys containing 17 % Fe in the deposit.

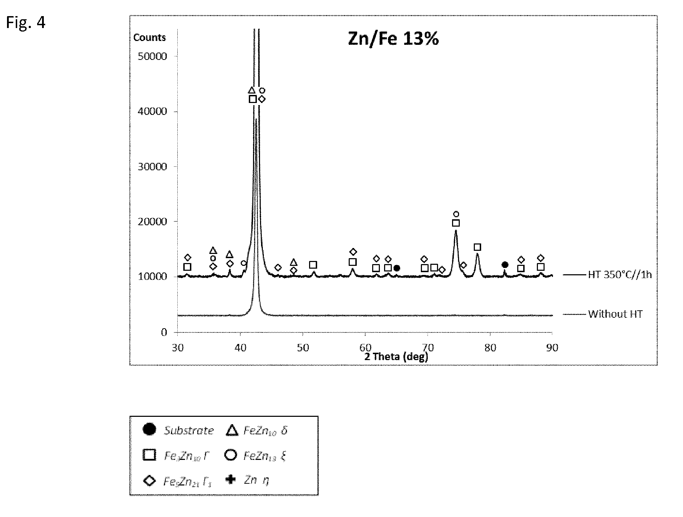

Fig. 4 shows a XRD structure of Zn/Fe alloys containing 13 % Fe in the deposit.

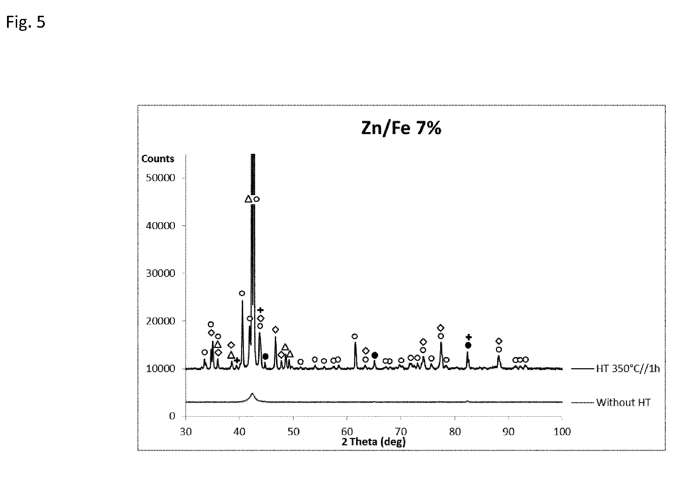

Fig. 5 shows a XRD structure of Zn/Fe alloys containing 7 % Fe in the deposit.

The following examples of electrolytes which lead to the deposition of zinc-iron deposit with a high content of iron are shown in table 1.

**Table 1**

| Example | 1 | 2 | 3 | 4 |
|---|---|---|---|---|
| Components NaOH g/L | 80 | 80 | 80 | 80 |
| Zinc g/L | 8,125 | 8,125 | 8,125 | 8,125 |
| Complexing agent g/L | 74,6 | 74,6 | 74,6 | 74,6 |
| Mirapol WT g/L | 0,2 | 0,2 | 0,2 | 0,2 |
| Iron deposited | 7% | 13% | 17% | 28% |

The main advantage associated with the deposition of high Fe Zn/Fe alloys consists in an increase of anticorrosion behaviour compared to pure Zn as well as the possibility to obtain comparable performances to Zn/Ni alloys.

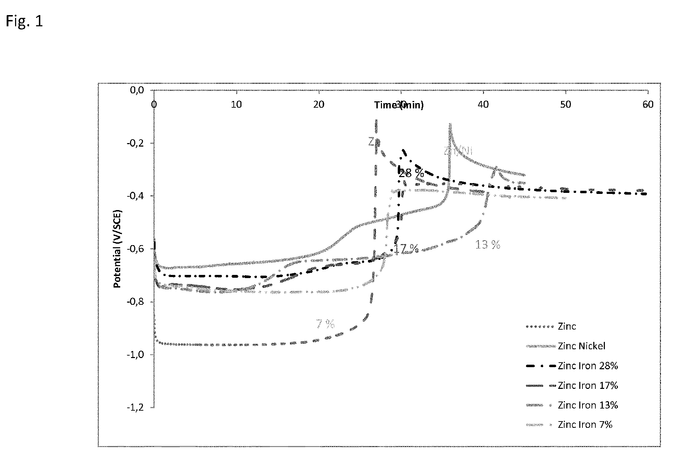

Fig. 1 shows the chronopotentiometric curves of different Zn/Fe alloys (without passivation) for different percentages of Fe at same thickness (10 +/-1 µm) when submitted to a corrosive environment (NaCl 50 g/L in water). After an open circuit potential measurement during 5 minutes to stabilize the potential, a current of 10 mA/cm² is applied to the system. The curve representing a 7% Fe deposit shows that the starting potential of the deposit increased by 200 mV compared to pure Zn : from - 0.95 V to - 0. 75 V. It is also obvious to see that all the Zn/Fe alloys considered are corroded after a longer time than pure Zn, ie from 29 to 41 min versus 27 min for pure Zn for the same deposit thickness.

It is also totally unpredictable to see that Zn/Fe alloy with 13% Fe showed an even longer time before corrosion compared to Zn/Ni that is considered as a reference in terms of anticorrosion properties.

It is then obvious from Fig. 1 that Zn/Fe alloys with high iron percentages offer a real improvement versus pure Zn deposits and also an effective alternative versus Zn/Ni deposits with high Ni percentage.

### Diffraction diagrams

The phase structures of the Zn/Fe deposits were determined by X-ray diffraction (XRD) equipped with a copper tube CuKα. 2θ scans were performed between 30 to 100°. The table n°2 shows Zn/Fe phase characteristics expected (s. table 2).

**Table 2**

| **Phases** | **Formula** | **Crystal structure** | **Space group** | **Predominating peak** | |
|---|---|---|---|---|---|
| | | | | **(*hkl*) plan** | **2Theta** |
| *α Fe* | Fe (Zn) | Body-centered cubic | Im-3m | (110) | 44,67° |
| ┌ | Fe₃Zn₁₀ | Body-centered cubic | I-43m | (330) | 42,49° |
| ┌₁ | Fe₁₁Zn₄₀ | Face-centered cubic | F-43m | (822) | 42,6° |
| *δ* | FeZn_{10,98} | Hexagonal | P6₃/mc | (330) | 42,27° |
| ξ | FeZn₁₃ | Base-centered monoclinic | C2/m | (131) | 41,54° |
| *η Zn* | Zn (Fe) | Hexagonal | hP2 | | |

To improve the crystallization's degree and clearly identify phases in the Zn/Fe alloys, a heat treatment (HT) was applied onto the alloy.

The superior anticorrosion behaviour of Zn/Fe deposits ranging from 7% Fe to < 28% Fe is linked to a crystallographic structure that was composed of a mixture or not of different phases : ξ, δ1, η, ┌1 and ┌, all providing a superior corrosion resistance to the alloy. When only the gamma phase was present in the alloy: i.e. for 28% Fe, the anticorrosion behaviour of the alloy was inferior.

### Salt Spray Test performance

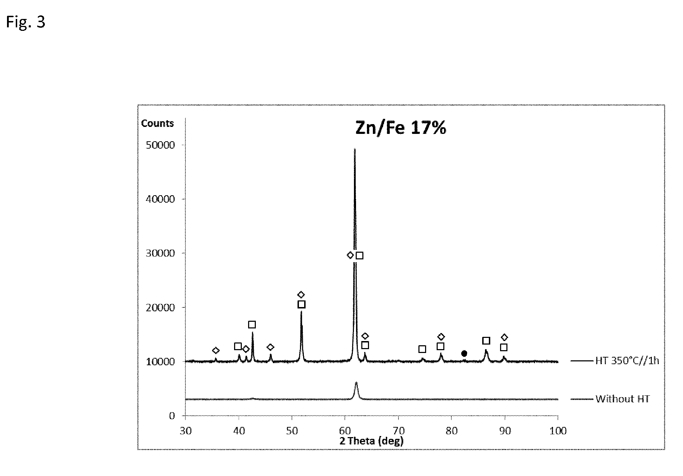

The alloys deposited showed homogeneous structure besides the alloy containing 28% Fe that was showing some hazy areas on the deposit(see Fig. 3).

The superior corrosion resistance of Zn/Fe alloyed deposits has to be evaluated according two parameters :
1. Their ability to delay the appearance of white rust corresponding to a cosmetic corrosion, ie the appearance of white salts corresponding to the corrosion of zinc.
2. The delay in the appearance of red rust corresponding to the corrosion of the steel substrate material.

The evaluation of corrosion resistance is evaluated thanks to different tests depending on the specifications of the OEM. The most used test is the Neutral Salt Spray Test performed according to ISO 9227.

The parts plated with Zn or Zn alloys are generally submitted to a conversion layer made from a Cr(III) conversion electrolyte. These conversion layers used to contain Cobalt as an additional element to reinforce resistance against corrosion. As Cobalt salts have been placed in the SVHC list under REACH regulation, it is required to find alternatives.

The applicant has developed such alternatives like Finidip 128 CF which is a Cobalt free conversion layer giving performances comparable to Cobalt containing conversion layers.

The various Zn/Fe deposits were then passivated with the Finidip 128 CF conversion solution according to the following sequence and tested in accelerated corrosion atmosphere, references were established with the highest anticorrosion conversion solution containing Cobalt : named Lanthane 315 on pure Zinc and Finidip 128 on Zn/Ni. Neutral salt spray test performances will be reported in the following examples.

### Operating sequence :

Galvanized steel panels (having a size of 100*70*0,25 mm³) are pickled in HCl 17% for 1 minute to remove the protective Zn layer, rinsed, electrolytically cleaned in Prelik 1000 at room temperature for 2 minutes under cathodic and 30 s anodic polarization at current density of 2 A/dm² and finally rinsed in a 2 stage cascade rinse. Next, a zinc/iron alloy layer was deposited from a plating baths discussed in the respective examples.

Then, the substrates were rinsed with water and a Cr³⁺ passivation layer was deposited onto zinc/iron alloy coating from a passivation bath Finidip 128 CF (Coventya) that is a Cr(III) based conversion layer and is free of Cobalt. The zinc/iron alloy layer was rinsed and drained.

Finally, a top-coat was deposited onto the zinc/iron deposits passivated from Finigard 150 and dried.

## Claims

1. Electroplating bath for zinc-iron alloys, comprising
a) from 4 to 20 g/L of zinc ions,
b) from 1 to 10 g/L of a iron ions,
c) from 20 to 150 g/L of sodium hydroxide and/or potassium hydroxide,
d) from 0,02 to 0,1 g/L of a quaternary ammonium polymer and
e) at least one complexing agent selected from the group consisting of amines, polyols or mixtures thereof.

2. Electroplating bath according to one of the preceding claims, **characterised in that** that the iron ion concentration is 1 to 10 g/L preferably 1 to 5 g/L and/or the zinc ion concentration is 4 to 20 g/L, preferably 6 to 10 g/L in the electroplating bath.

3. Electroplating bath according to one of the preceding claims, **characterised in that** sodium hydroxide concentration is 30 to 120 g/L in the electroplating bath.

4. Electroplating bath according to one of the preceding claims, **characterised in that** the quaternary ammonium polymer is represented by any of the general formulas I and II, 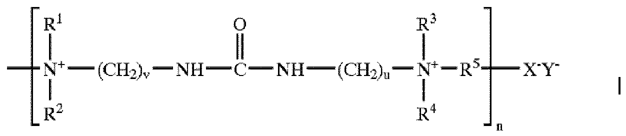 or, 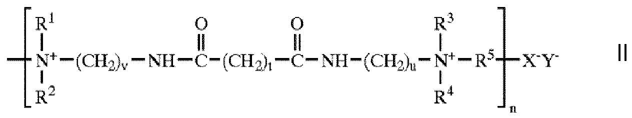 wherein
R¹, R², R³, R⁴ are the same or different and include: -CH₃, -CH₂CH₃, - CH(CH₃)₂, -CH₂CH₂OH; R⁵ is -CH₂CH₂-, -CH₂CH₂CH₂-, -CH₂CH₂CH₂CH₂-, - CH₂CHOHCH₂- or -CH₂CH₂OCH₂CH₂-;
X and Y can be the same or different anions and include: chlorine, bromine and iodine; wherein u, v and t can be the same or different and can vary from 1 to 7, and preferably, the cationic polyamine polymer is Poly[bis(2-chloroethyl)ether-alt-1,3-bis[3-(dimethylamino)propyl]urea] quaternized (Mirapol-WT^{®}).

5. Electroplating bath according to one of the preceding claims,
**characterised in that** the electroplating bath comprises N-benzyl-pyridiniumcarboxylate, N-methyl-pyridiniumcarboxylate, Imidazole/ Epichlorohydrine reaction products, aldehydes like veratraldehyde, anisaldehyde, vaniline or combinations thereof.

6. Electroplating bath according to one of the preceding claims,
**characterised in that** the electroplating bath has a temperature of 15 °C to 45 °C, preferably 20 °C to 30 °C.

7. Method for depositing a zinc-iron alloy on a device,
**characterised in that** the electroplating bath according to one of claims 1 to 7 is used and electroplating is carried out at a current density of 0,01 to 20 A/dm², preferably 1 to 3 A/dm² at a temperature of the electroplating bath of 15 °C to 45 °C, preferably 20 °C to 30 °C.

8. Device comprising an anti-corrosive layer of a zinc-iron alloy wherein the layer has a content of iron of 7 to 28 wt.-% and the iron comprises at least two of crystalline structures selected from the cubic, the monoclinic and the hexagonal crystalline structure of Zn/Fe.

9. Device according to claim 8,
**characterised in that** the crystalline structures are selected from the phases ξ, δ1, η, Γ1 and Γ and combinations thereof.

10. Device according to any of claims 8 or 9,
**characterised in that** the layer has a thickness of 0.5 to 50 µm, preferably 3 to 20 µm.

11. Device according to any of claims 8 to 10,
**characterized in that** the layer has a content of iron of more than 20 wt.-%, preferably 21 to 28 wt.-%.

12. Device according to any of claims 8 to 10,
**characterized in that** the layer has a content of iron of less than 12 wt.-%, preferably 7 to 12 wt.-%.

13. Device according to any of claims 8 to 12, producible by the method of claim 7.

14. Use of the electroplating bath according to one of claims 1 to 7 for protecting steel parts against corrosion.

## Amended claims

### Amended claims in accordance with Rule 137(2) EPC.

**1.** Electroplating bath for zinc-iron alloys, comprising
a) from 4 to 20 g/L of zinc ions,
b) from 1 to 10 g/L of a iron ions,
c) from 20 to 150 g/L of sodium hydroxide and/or potassium hydroxide,
d) from 0,02 to 0,1 g/L of a quaternary ammonium polymer and
e) at least one complexing agent selected from the group consisting of amines, polyols or mixtures thereof,
the electroplating bath being completely free of any carboxylic acids.

**2.** Electroplating bath according to one of the preceding claims, **characterised in that that** the iron ion concentration is 1 to 10 g/L preferably 1 to 5 g/L and/or the zinc ion concentration is 4 to 20 g/L, preferably 6 to 10 g/L in the electroplating bath.

**3.** Electroplating bath according to one of the preceding claims, **characterised in that** sodium hydroxide concentration is 30 to 120 g/L in the electroplating bath.

**4.** Electroplating bath according to one of the preceding claims, **characterised in that** the quaternary ammonium polymer is represented by any of the general formulas I and II, 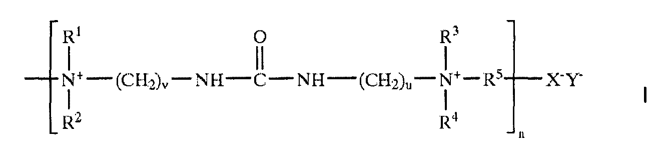 or, 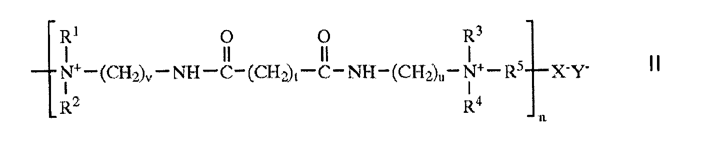 wherein
R¹, R², R³, R⁴ are the same or different and include: -CH₃, -CH₂CH₃, - CH(CH₃)₂, -CH₂CH₂OH; R⁵ is -CH₂CH₂-, -CH₂CH₂CH₂-, -CH₂CH₂CH₂CH₂-, - CH₂CHOHCH₂- or -CH₂CH₂OCH₂CH₂-;
X and Y can be the same or different anions and include: chlorine, bromine and iodine; wherein u, v and t can be the same or different and can vary from 1 to 7, and preferably, the cationic polyamine polymer is Poly[bis(2-chloroethyl)ether-alt-1,3-bis[3-(dimethylamino)propyl]urea] quaternized (Mirapol-WT^{®}).

**5.** Electroplating bath according to one of the preceding claims, **characterised in that** the electroplating bath comprises N-benzyl-pyridiniumcarboxylate, N-methyl-pyridiniumcarboxylate, Imidazole/ Epichlorohydrine reaction products, aldehydes like veratraldehyde, anisaldehyde, vaniline or combinations thereof.

**6.** Electroplating bath according to one of the preceding claims, **characterised in that** the electroplating bath has a temperature of 15 °C to 45 °C, preferably 20 °C to 30 °C.

**7.** Method for depositing a zinc-iron alloy on a device, **characterised in that** the electroplating bath according to one of claims 1 to 7 is used and electroplating is carried out at a current density of 0,01 to 20 A/dm², preferably 1 to 3 A/dm² at a temperature of the electroplating bath of 15 °C to 45 °C, preferably 20 °C to 30 °C.

**8.** Device producible by the method of claim 7 comprising an anticorrosive layer of a zinc-iron alloy wherein the layer has a content of iron of 7 to 28 wt.-% and the iron comprises at least two of crystalline structures selected from the cubic, the monoclinic and the hexagonal crystalline structure of Zn/Fe.

**9.** Device according to claim 8,
**characterised in that** the crystalline structures are selected from the phases ξ, δ1, η, Γ1 and Γ and combinations thereof.

**10.** Device according to any of claims 8 or 9,
**characterised in that** the layer has a thickness of 0.5 to 50 µm, preferably 3 to 20 µm.

**11.** Device according to any of claims 8 to 10,
**characterized in that** the layer has a content of iron of more than 20 wt.-%, preferably 21 to 28 wt.-%.

**12.** Device according to any of claims 8 to 10,
**characterized in that** the layer has a content of iron of less than 12 wt.-%, preferably 7 to 12 wt.-%.

**13.** Use of the electroplating bath according to one of claims 1 to 7 for protecting steel parts against corrosion.
